# EUROPEAN PATENT APPLICATION

(11) **EP 1 705 574 A2**
(43) Date of publication of application: **27.09.2006**
(21) Application number: 06111266.0
(22) Date of filing: 16.03.2006
(51) Int. Cl.: G06F 12/00

(54) **Non-volatile backup for data cache**

(30) Priority: 21.03.2005 US 86100
(71) Applicant: SUN MICROSYSTEMS, INC., Santa Clara, CA 95054 (US)
(72) Inventor: Acton, John D., Danville, CA 94526 (US); Lee, Whay Sing, Mountain View, CA 94040 (US)
(74) Representative: Moore, Barry

(57) **Abstract**

A non-volatile data cache having a cache memory coupled to an external power source and operable to cache data of an external data device such that access requests for the data can be serviced by the cache rather than the external device. A non-volatile data storage device is coupled to the cache memory. An uninterruptible power supply (UPS) is coupled to the cache memory and the non-volatile data storage device so as to maintain the cache memory and the non-volatile storage device in an operational state for a period of time in the event of an interruption in the external power source.

## Description

### BACKGROUND OF THE INVENTION

### 1. Field of the Invention.

The present invention relates, in general, to data storage system and methods for data storage, and, more particularly, to software, systems and methods for implementing non-volatile backup for a data cache used in data storage systems.

### 2. Relevant Background.

The process of transferring data to and from disk storage includes storing the data temporarily in cache memory located on a RAID array controller that is managing the data transfer. The cache memory is typically implemented with high-speed memory devices such as dynamic random access memory (DRAM), static random access memory (SRAM) and the like. Because the access time for reading and writing to high-speed memory is orders of magnitude less than the time required to access disk-based storage, cache provides a significant performance improvement. In a write-back mode of operation, for example, as soon as the host computer writes data to the cache the write operation is completed and the host is able to perform other operations. In other words, the host does not have to wait for the write data to be transferred to disk.

One limitation of cache memory is that the fastest memory types are volatile. This means that when a power failure occurs, the content of the data cache are lost. Because the host systems have continued operation as if the data had been stored, recovery from a power loss can be difficult. Accordingly, high-reliability systems preserve cache contents even when faced with power failures to avoid loss of user data.

Some systems use battery-backed cache so that the cache continues to retain data even when external power to the system is interrupted. Battery power maintains data in the cache long enough for power to be returned to the system. Depending on the capacity of the batteries when external power is lost, battery-backed cache may be able to retain integrity of the data stored in cache for several days. Because the capacity is finite, however, if the batteries drain before power is restored data in the cache will be lost. Because the batteries may reside in a system unused for many months or years, the capacity of the batteries is often unknown. In some cases the batteries may be near failure and provide far less backup time than is expected.

Accordingly, a need exists for system and methods for preserving cache contents in a data storage system for periods longer than provided by battery backed up RAM, in the event of external power failure.

### SUMMARY OF THE INVENTION

Accordingly there is provided data cache in accordance with claim 1. Advantageous embodiments are provided in the dependent claims thereto. Also provided is a data storage system incorporating a cache, as detailed in claim 11. A method of protecting data according to claim 12 is also provided with advantageous embodiments detailed in the dependent claims thereto. Also provided are cache modules, disk drives and data storage systems configured to carry out the method steps of claim 12.

Briefly stated, the present invention involves a non-volatile data cache having a cache memory coupled to an external power source and operable to cache data of an external data device such that access requests for the data can be serviced by the cache rather than the external device. A non-volatile data storage device is coupled to the cache memory. An uninterruptible power supply (UPS) is coupled to the cache memory and the non-volatile data storage device so as to maintain the cache memory and the non-volatile storage device in an operational state for a period of time in the event of an interruption in the external power source.

A miniature storage device, such as a Microdrive, a compact flash device, or a miniature hard disk drive, is used to preserve the data cache content across power failures. The miniature storage device, the data cache, and logic such as a small processing unit are provided with auxiliary power, which is sustained despite the main power interruption. When the main power is interrupted, the remaining of the system is shutdown, while the auxiliary-powered components write out the data cache content to the miniature storage device. After the entire cache content is written out to the miniature storage device, the auxiliary power is shut down. When main power returns, the cache content is restored from the miniature storage device. Normal operation may then resume, as if the power failure never occurred.

### BRIEF DESCRIPTION OF THE DRAWINGS

Fig. 1 shows a networked computing environment implementing switched port architecture for implementing the present invention;

Fig. 2 shows an exemplary processor blade incorporating the non-volatile storage device in accordance with an embodiment of the present invention;

Fig. 3 illustrates a particular implementation of the present invention; and

Fig. 4 shows a fragment of a mirrored-cache WRITE operation in accordance with the present invention.

### DETAILED DESCRIPTION OF THE PREFERRED EMBODIMENTS

The present invention is illustrated and described in terms of a storage architecture that combines data services functions such as virtualization, storage consolidation and pooling, secure provisioning, and advanced data services functions like point-in-time copy, and the like together with data protection functions of RAID and caching functionality of a storage array. This combination forms a high-performance integrated data storage solution. The present invention provides a system and method for improving robustness of the system in the event of power failures by backing up cache with non-volatile disk-based storage. An advantage of solutions in accordance with the present invention is that they are more amenable to preserving the contents of very large caches permanently (indefinitely-long power outages), without requiring a very large reserve of uninterruptible power. At the same time, the present invention allows the system to resume operation quickly after brief power interruptions.

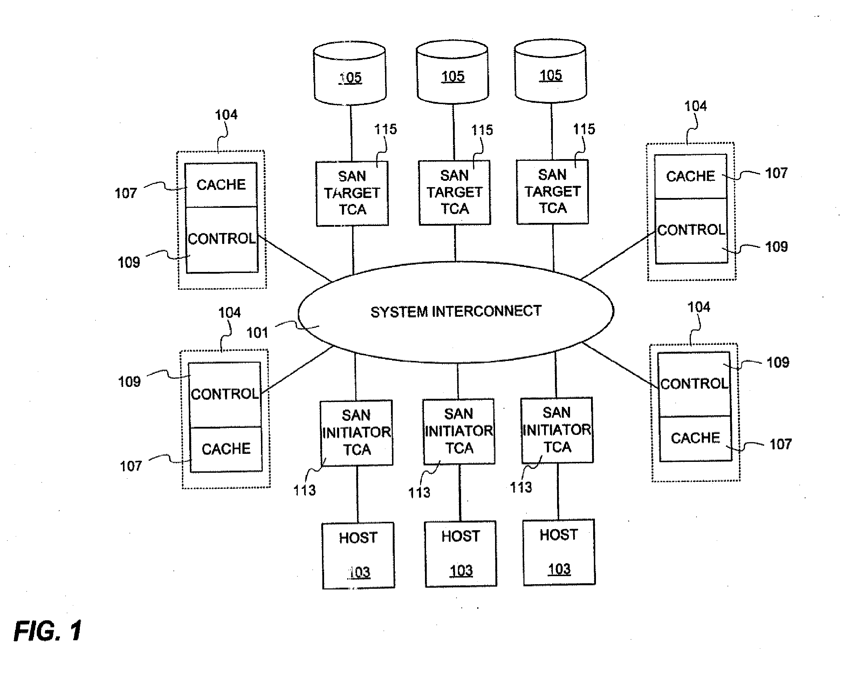

Fig. 1 shows a storage area network (SAN) environment implementing switched port architecture for implementing the present invention. System interconnect 101 comprises any of a variety of network interconnection technologies including Fibre Channel (FC), Internet Protocol (IP), mixed and hybrid systems as well as other physical connection protocols. The initiator/target nomenclature in Fig. 1 is typical of that used in SCSI-type devices frequently used in storage area networks (SANs), however, SCSI as well as other protocols may be used in accordance with the present invention. System interconnect 101 functions to transport storage access requests and responses between initiators (e.g., hosts 103) and storage devices 105. System interconnect 101 includes one or more switches, for example.

Hosts 103 comprise any type of device that generates data access requests such as mainframes, workstations, database servers, and the like. Host 103 may also be implemented by a special purpose device such as a media server, consumer set top box (STB), point of sale (POS) device and the like. Data storage devices 105 represent any type of storage device including hard disk drives, tape storage, optical disk/tape storage and the like including arrays of such devices.

SAN target channel adapters (TCAs) 113 and 115 couple hosts 103 and data storage devices 105 to system interconnect 101. The TCAs 105 provide a high-performance interface to system interconnect 101 shown in Fig. 1. Storage controllers 104 are coupled to system interconnect as well and communicate with both hosts 103 and storage devices 105. Controllers 104 include data processing components to implement control system 109 as well as non-volatile cache 107. Controllers 104 provide functionality such as storage virtualization, caching, RAID data protection, and similar storage services. Storage access requests are received from a host 103 through its SAN initiator TCA 113.

In write-back operation, a storage controller 104 responds to a data access request using data in its cache 107 when possible so that the response can be fulfilled significantly faster. Write back mode refers to an operation mode in which data in a cache 107 can be used (e.g., read, written and/or modified) asynchronously with the non-volatile copy that data into a physical storage device 105. In normal operation the data in caches 107 are routinely synchronized with the physical storage device to provide data integrity (i.e., the data used in response to an access request is in fact the correct data). However, write back mode creates a risk there will be some time periods in which the only accurate copy of the data will exist in cache 107. Should controller 104 experience a power interruption while its cache 107 holds the only true copy of data, it is important that the cache contents be preserved until power and normal system operation is restored so as to maintain data integrity.

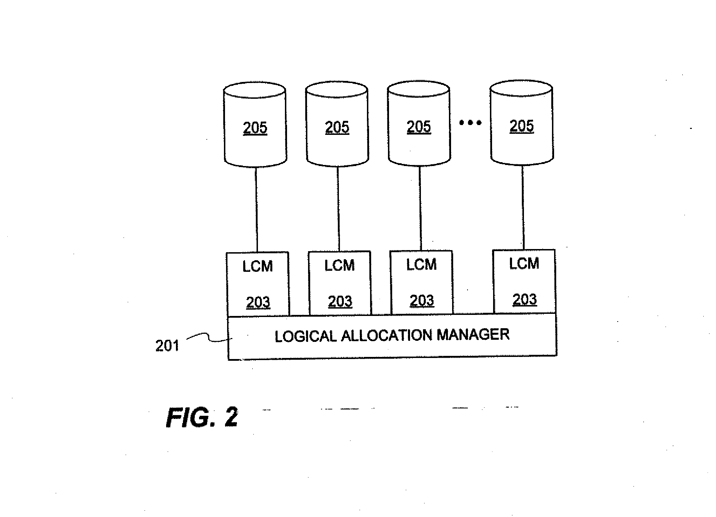

Data storage devices 105 may be logically presented as any number of logical storage devices 205 shown in Fig. 2. In particular implementations a logical allocation manager 201 implemented within control component 109 implements processes that present logical storage devices 205 for use by hosts 103. Logical allocation manager 201 also implement an interface to receive storage access requests directed to a particular logical storage device 205. Logical storage devices 205 may comprise all or portions of physical storage devices 105. Logical storage devices 205 may be constructed to improve storage performance or to provide features such as data protection (e.g., redundancy such as RAID).

Storage access request identify a particular logical unit of storage 205. A storage request is routed by system interconnect 101 to a particular controller 104 responsible for implementing that logical unit of storage 205 identified in the request. In some implementations redundant connection to logical storage 205 may be implemented in which case interconnect 101 should include mechanisms for determining which of the available redundant resources should be used to satisfy a particular request. Controller 104 then accesses a logical storage device 205 by making appropriate requests to one or more physical storage devices 105 using appropriate access commands directed to one or more SAN target TCAs 115. The physical devices 105 respond with the requested data to the controller 104 (or some status/error message if the data is unavailable). Controller 104 then responds to the TCA 113 from which the data access request originated.

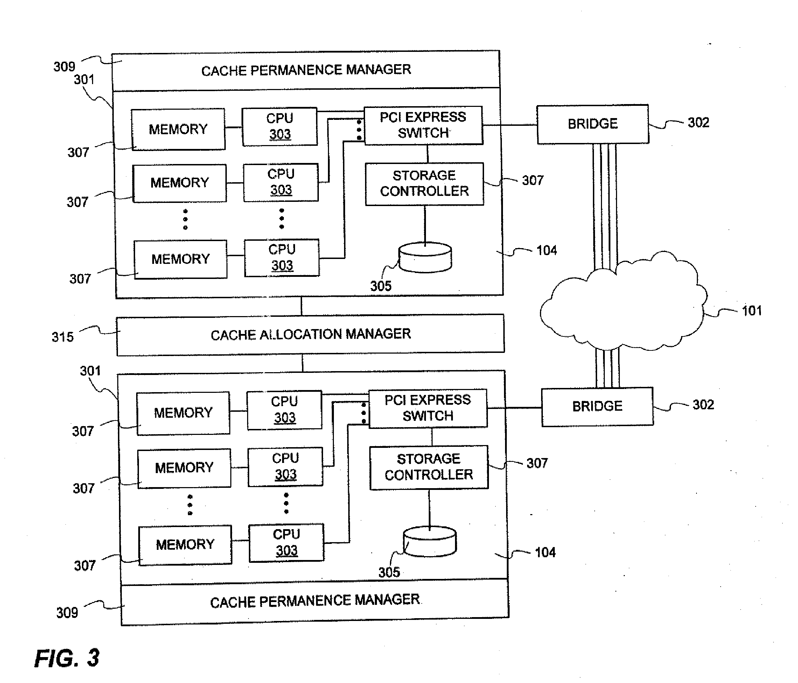

In a particular implementation shown in Fig. 3, controllers 104 are implemented as processor blades 301 coupled to a backplane that implements a bridge 302 to system interconnect 101. In an exemplary implementation the processor blades 301 and bridges 302 are implemented a standard form factor chassis (not shown) that can accommodate up to eight processor blades 301 and eight TCAs 113/115 (shown in Fig. 1). The processor blades 301 perform various data services, virtualization, caching and RAID functions, while the bridges 302 provide connectivity to application hosts 103 and storage devices 105. The number of processor blades 301 used in any particular implementation is a matter of choice to meet the needs of a particular application.

As shown in the specific implementation of Fig. 3, each processor blade 301 includes one or more processors 303 which may be coupled to memory 307. Caches 107 are implemented, for example, within all or a portion of memory 307. Memory 307 may comprise a single type of memory device or, alternatively, may itself comprise a hierarchical memory architecture have one or more levels of cache to improve performance of memory access operations. Some or all of memory 307 may be integrated on a single device with a processor 303. Alternatively or in addition, some or all of memory 307 may be implemented in devices that are separate from processors 303.

A particular controller 104 may implement multiple caches 107 where each cache 107 is associated with a particular logical storage device 205 implemented by that same controller 104. System interconnect 101 is implemented as a redundant Infiniband fabric in the specific implementation of Fig. 3. In a particular implementation a redundant pair of power supplies (not shown) provide power to the components processor blades 301, bridge devices 302, and TCAs 113/115 as well as the interconnect. In the particular embodiment, the redundant power supplies are not protected by an uninterruptible power supply (UPS) system. In the particular implementation, physical storage devices 105 shown in Fig. 1 are implemented externally from the chassis in which the processor blades 301 and TCAs 113/115 are housed.

To improve bandwidth, the data cache 107 can be physically distributed to several or all of the processor blades 301, although the cache remains logically a single pool of cache resources managed by a physical cache manager (309 and 315), which operates to ensure the safety of the cache contents (e.g., non-volatility during a power outage, reconstruction after a cache module failure, periodic scrubbing, and the like.). The collection of distributed memory 307 is managed to provide a unified pool of cache resources that is dynamically allocated to a number of "logical cache managers" (LCMs) 203 implemented in conjunction with logical allocation managers 201, each of which manages the actual caching functions for a number of virtualized or logical storage volumes 205. This scheme provides a means to isolate the caching behaviors of the different storage volumes, while retaining much flexibility for optimizing the use of the limited cache resources.

The data cache 107 is expected to grow to 2x 16GB in size, with each physical module 307 on a processor blade 301 being at least 4GB in size. To maximize system write performance, the data cache should be able to operate in write-back mode. This implies, in the case of a power outage, the system should preserve any dirty content left in the cache by a committed operation. The term "dirty content" refers to content in a cache that has been changed with respect to the copy of that data in non-volatile storage 105. Further, in order to guard against data loss during prolonged outages, such as what has occurred in the vicinity of large disaster areas, the dirty content should be preserved for an indefinite amount of time. Where ultra high availability is required, the data cache is preferably able to return to service at full performance, if the power is interrupted only momentarily (i.e. a short power glitch or brown out where the volatile cache is never turned off).

Since providing an external redundant UPS for a full storage system involves a very substantial cost, a non-volatility solution for the data cache should either have a self-contained embedded battery, or rely on only a small external UPS, without requiring uninterruptability in the main power supply packs. For high density, it is desirable for the non-volatility solution and any associated UPS to fit inside the storage system housing, without taking up any additional rack space. To reduce software complexity and to prevent human errors that can jeopardize system availability, the cache non-volatility solution should also be self-sufficient within the system chassis, without being dependant on any externally cabled "non-volatility unit". This reduces the number of failure scenarios that the software should guard against, and avoids the need to guarantee the integrity of the inter-chassis cables or to provide UPS to the external unit when mains power is interrupted.

The scaleable nature of the present invention provides for a long-lived design that can be deployed on a variety of platforms, ranging from low cost to high end systems. The non-volatility solution for the data cache is scalable in terms of capacity, performance and cost, in order to fit into the different deployment vehicles. For example, a large system may be embedded inside a very large IB fabric consisting of a number of compute nodes in addition to the storage controller blades. In such a system. It may be impractical to protect the entire interconnect fabric 101 with UPS, and therefore the cache non-volatility solution may not be able to rely on the system interconnect being in service when mains power is interrupted. Conversely, a cost-reduced platform may consist of only a small number of blades 301 connected directly to each other. In such systems, the inter-blade communication is not interrupted, but the design may be constrained to a very low cost.

The non-volatile data cache design in accordance with the present invention can be based on commodity DRAM memory, backed up by a choice of miniature permanent (i.e., non-volatile) storage devices 305. Devices 305, generally a small number of inches in size, are commonly used in consumer electronic devices (digital cameras, etc), and are available in a variety of forms and technologies. The specific examples consider three major types of miniature storage devices which support a common ATA disk interface protocol: (a) 1-inch Microdrive, in CF-II form factor, from Hitachi/IBM; (b) Flash Memory, in CF-II form factor, from Sandisk etc; and (c) 1.8" Disk Drives, from Toshiba and Hitachi. A significant motivation for considering the use of miniature storage devices is their small physical size as well as the small amount of power required to power them, which allows them to be embedded into a system chassis. It is expected that a variety of non-volatile storage devices are and will become available that are suitable to meet the functional demands of the present invention.

Power outages occur, on average, anywhere from once a week to once a month, and allow for burstiness, such that up to several outages can occur within 24 hours. The present invention is designed to handle outages that may last for several seconds to several weeks, as well as allow for glitches that lasts only a number of milliseconds. So as to avoid stiction resulting from long idle periods when no outages occur, it may be desirable to spin up the miniature disk from time to time, even when the mains power is stable. It may also be desirable to perform a surface scan (write pattern and read back) periodically, to preemptively detect any "bit rot". These precautions are taken primarily for the rotating disk devices to ensure the functionality of the mechanical devices, and may not be needed for flash based devices.

The memory 307 in this design does not need to be inherently non-volatile. However, when a power outage does occur, a copy of the DRAM content is deposited into the miniature non-volatile storage device 305, both being kept alive in the memory by a small UPS until the copy is complete. When main power returns, the saved content in the non-volatile storage device 305 is restored to the DRAM before normal operation is resumed. In order to ride through short power glitches without performance degradation, the DRAM may also be UPS'ed for an additional "grace period" after the copying is complete. In this manner normal operation can be resumed almost instantly when power returns after a brief interruption, without waiting for the cache content to be restored from the miniature device. Significantly, the miniature device 305 does not need to play a role in data transactions in normal operation and so does not add latency to normal operation. Miniature devices 305 become active when needed (e.g., in the event of a power failure).

To conserve UPS power, unused portions of the system can be shut down while the copying proceeds. For large systems where it may be impractical to UPS the high performance system interconnect, the contents of each cache DRAM module may be written into an independent miniature device 305 located in close physical proximity to the module, such that non-volatility is not dependent on the system interconnect. Such an arrangement also results in a higher parallel bandwidth needed to quickly preserve the larger amount of DRAM content. On the other hand, in small systems where the system interconnect can be protected by an uninterruptible power supply during a power outage, a smaller number of these miniature devices 305 may be used to back up all of the cache modules 107 across the system interconnect, to achieve a lower cost.

By flushing the cache content into a miniature device 305, the present invention provides non-volatility for a nearly indefinite period of time. Since only a small portion of the system (e.g., the DRAM memory 307, the miniature device 305, and the necessary circuitry to make the copy) is kept alive for the short period of time upon power outage, only a small amount of reserve power, such as less than 10 Watt hours (36,000 Joules) is needed. For example, an uninterruptible power supply of 5 Watt hours (18,000 Joules) is able to provide nearly permanent data protection for a 100 Watt core which requires 3 minutes to transfer data to the miniature device. Furthermore, the system cache size may be scaled by adding DRAM/miniature storage device combination modules (e.g. one combination module per processor blade 301).

A variety of hardware implementations are contemplated. A simple implementation involves adding an ATA disk interface controller to the processor blade 301 to implement storage controller 308. Storage controller 308 is coupled to an interface bus with a device such as a PCI Express switch 311 that provides high-speed interface with bridge 302 and other components on blade 301 such as processors 303 and memory 307. When a power outage occurs, unused components are shutdown and CPUs 303 attached to a memory 307 whose content should be preserved are placed into low power mode (e.g., reduced clock rate & memory self-refresh). One of the processors 303 (when more than one processor 303 is implemented per blade) is selected to begin writing the content of its cache or caches 107 from memory devices 307 into the miniature storage device 305. When that process is completed the selected processor 303 may either (a) relegate control of the miniature device 305 to another processor 303 so that the other processor 303 can in turn write out its cache content, or (b) reach into the memory 307 of the other processor 303 and copy the cache 107 content into the miniature device 305.

The first option (i.e., option (a) above) allows the processors 303 to keep their memory space opaque to each other, but requires the miniature device 305 to be able to service each of the processors 303 (or for a miniature device 305 to be provided for each processor 303). This may complicate the design in both hardware and software aspects as each processor 303 takes turns to "own" the storage controller 308. The second option (i.e., option (b) above) requires the processors 303 to make their memory space accessible to a chosen "master-dumper" processor 303. The second option may be simpler to implement. Furthermore, in a low end system, some of the processor blades 301 may contain a cache 107 without also having its own miniature storage device 305, in which case the second approach may be more appropriate, depending on the characteristics of the system interconnect.

In addition to preserving the data cache content, the master-dumper processor 303 may also choose to make certain metadata or other program state data non-volatile by writing that metadata and/or program state data onto certain preselected regions on the miniature storage device 305. Such additional state may be useful in simplifying the cache-restore process, or for failure recovery. It is contemplated that storage to the miniature storage device 305 may be activated only upon a power outage, or may be activated as a periodic checkpoint

The present invention may be further extended to avoid an undesirable delay of service resumption when power is restored after a short interruption. By sizing the reserve power appropriately, the system may be kept in low power mode for a period of time (e.g., several hours, or some period that covers a large percentage of typical outages) after the cache content has been written to the miniature storage device 305. When power is restored within this grace period, the system may simply exit from low power mode and resume normal operation at full performance immediately. The system only needs to wait for the system to go through the boot process and for the cache content to be explicitly restored from the miniature disk 305 if the power outage lasts for longer than this period, and the system is shutdown completely.

### 1. EMERGENCY BACKUP PROCEDURES

When a power outage occurs, the physical cache manager (not shown) is responsible for the orderly shutdown of cache 107 after the cache contents have been deposited into a miniature storage device 305 for non-volatility. Similarly, when power returns, the physical cache manager oversees the restoration of the cache contents from the miniature devices 305, before turning over control of the various portions of the cache pool to their respective LCM 203 (shown in Fig. 2).

The physical cache manager (PCM) comprises two components: a fault-tolerant cache allocation manager 315, and a collection of cache permanence managers 309. There is a single instance (but with a backup instance) of the cache allocation manager 315 for each system, and one cache permanence manager 309 on each processor blade 301 containing a cache 107. Together, the cache allocation manager 315 and the cache permanence managers 309 are responsible for managing the physical cache resources and caring for the safety of their contents.

The LCMs 203 are associated to virtual storage devices 205. Each LCM 203 may manages one or more virtual volumes, but for ease of illustration Fig. 2 shows each LCM 203 as associated with a single virtual storage device 205. For example, several caches 107 having similar quality of service (QoS) characteristics may be handled by a single LCM 203. There can be any number of LCMs 203 on each processor blade 301, depending on how many different types of virtual volumes 205 are being handle by the blade 301, and on how the system distributes the load.

In order to lessen service resumption delay when mains power returns, the cache content written into the miniature disk 305 may be explicitly divided into metadata and user data. The metadata is placed into a predetermined location in the miniature disk 305, and the user data is placed in such a way that there is a predetermined direct mapping between the memory addresses and the miniature disk block addresses. This allows the metadata to be restored into memory 107 first when power returns, so that it may be used to locate user data blocks on the miniature disk 305 before they are fully restored into the memory 107, enabling normal service to be resumed immediately, albeit at reduced performance.

The procedures described in this section may also be applicable if one of the disk drives in the disk array is used as the emergency cache backup depository instead of a miniature storage device 305 (e.g. a disk in the array is the miniature storage device 305).

### 2. SHUTDOWN PROCEDURE

The allocation manager is the first to receive notification of a power outage. Upon such notification, the allocation manager performs the following:
1. Stop processing all cache allocation and deallocation requests.
2. Make permanent the cache allocation metadata by writing it out to permanent storage (e.g. a miniature disk 305).
3. Inform Permanence Managers of power outage. Make sure the notifications are acknowledged.
4. Inform other devices that the PCM no longer needs to use the fabric.
5. Wait for grace period to expire. Shutdown.

The allocation metadata includes information necessary for resuming operation subsequently, such as: (a) which LCMs 203 are present and where; (b) what portions of the cache pool are allocated to which LCMs 203; (c) which portions of the cache are unassigned; and (d) what portions of the cache are mirrored and where they are mirrored.

By splitting the physical cache manager into the allocation manager 315 and permanence manager component 309, the system may shutdown the interfaces to interconnect 101 as soon as possible (but not necessarily immediately after step 4 above, since other parts of the system may still require global communication) to conserve UPS power. Alternatively, each LCM 203 may perform the permanence manager function for its own volumes. It is less complex to have a single entity running the miniature disk 305, to maximize streaming performance during the flush of data from memories 307 to miniature devices 305.

When notified of the power outage, the permanence manager 309 prepares for an orderly shutdown of the processor blade 301. This involves:
1. Inform all LCMs 203 on the blade 301 to stop writing to the cache. Wait for this to be acknowledged.
2. Place blade 301 into low power mode.
3. Copy the entire content of the cache 107 into a permanent storage device (e.g. a miniature disk 305), computing a strong checksum along the way for each portion owned by an LCM 203.
4. Write checksums and timestamp to the miniature storage device 305.
5. Wait for grace period to expire and then shutdown.

When placing the processor blade into low power mode, all but one processor 303 may be shut down completely, leaving one processor 303 running at reduced clock rate to oversee the copying process so long as all caches 107 on the blade 301 are accessible by the remaining processor 303. In cases where each processor contains its own memory controller (and the storage data cache is in memory 307 connected to that memory controller), all processors 303 may have to be kept alive so that they can take turns copying their data cache content into the storage device 305. To optimize bandwidth usage, each processor 303 should finish writing all of its cache contents into the storage device 305 before the next processor 303 gets its turn, to improve sequential access to the rotating disk.

Because permanence managers 309 on different blades 301 do not need to communicate with one another there may be no confirmation for whether the mirror copy of the cache module 107 has been backed up successfully into a storage device 305. The present invention uses a checksum (step 4 above) to validate the data when it is subsequently restored to cache 107. To lessen the impact of a subsequent failure to recover a block, a separate checksum should be computed for each portion of the cache module 107 allocated to an LCM 203, as well as for any corresponding metadata. LCMs 203, when told to stop writing to a cache 107, should do so as soon as possible. If the UPS power level permits, they should complete all current in-flight WRITE operations before shutting down, after the grace period expires. Otherwise, this may involve abandoning all pending/in-transit write or cache-mirror operations which may leave some cache locations with indeterminate content, and should be avoided if possible. It is however still acceptable (since the corresponding WRITE operations should not have been acknowledged to the host yet) as long as the LCMs 203 do not leave any metadata in a self-inconsistent state (e.g., no dangling pointers, truncated lists etc).

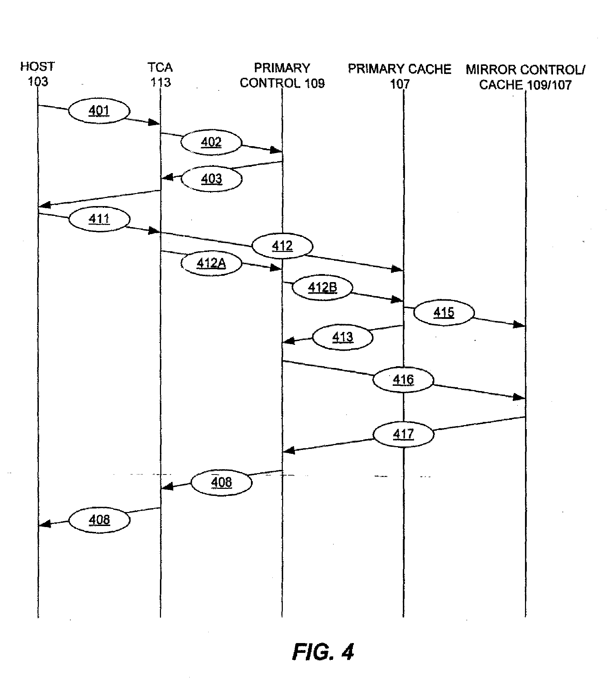

Fig. 4 shows a fragment of a mirrored-cache WRITE operation in accordance with the present invention. A mirrored cache write operation involves processing a write operation requested by a host 103 so that it is written to both a primary controller 109 and cache 107 as well as a mirror control 109 and cache 107. The processes are implemented so as to ensure that the primary and mirror copies are consistent or that any inconsistency is apparent. In general a host request 401 is passed to a TCA 113 which generates an access request 402 to primary control 109. The primary control 109 sends a status message 403 (e.g., an acknowledge or "ACK") to TCA 113 which is passed on to host 103 to indicate that the WRITE can continue. In Fig. 4, it is acceptable for the LCMs 203 to abandon a WRITE operation at any time, except when it is halfway updating either the primary metadata, or halfway updating the mirror metadata. By "acceptable" it is meant that the WRITE operation can be abandoned without affecting data integrity.

Host 103 sends a WRITE operation message 411 to TCA 113. In an interconnection 101 that supports remote direct memory access (RDMA), an RDMA command 412 is generated by TCA 113 to directly write the data that is subject of the WRITE operation to primary cache 107. A cache fill notification 412A and RDMA request 412B are implemented with primary control 109 resulting in an RDMA complete message 413 when the WRITE to primary cache is completed. Cache fill notification 412 results in updating the metadata associated with the primary controller 109 so that the primary controller 109 now points to the new version of that is cached in primary cache 107.

Primary cache 107 generates an RDMA message 415 to the mirror cache 107 and mirror controller 109 to send the WRITE data to the mirror. Primary controller 109 sends a cache fill notification 416 to the mirror controller 109 to affect an update of the mirror metadata. Mirror controller 109 generates a cache update notification 417 to primary controller 109. Primary controller 109 then generates a status message 408, such as an ACK message, indicating that the WRITE operation is completed. Because the processes shown in Fig. 4 show a write-back operation, the activities involved in copying data from caches 107 to the logical storage devices 205 are not shown and can, in practice, occur some time after the processes shown in Fig. 4 because caches 107 are effectively non-volatile.

At the time an LCM 203 shuts down, several cases may exist: (a) neither metadata updates 412A or 416 took place; (b) primary metadata is updated (e.g., activity 412A completes), but mirror metadata is not (e.g., activity 416 does not complete), or (c) both copies of the metadata have been updated (e.g., operations 412A and 416 completed). A case where the mirror metadata is updated, but primary metadata is not is not considered, since the RDMA request 415 to copy the data to the mirror cache (which precedes the mirror metadata update) is not issued until the primary metadata has been updated in operation 412A.

In case (c), both copies of the metadata in the primary cache 107 and mirror cache 107 translate the block address to the new version of the data. If an ACK (i.e., acknowledge) 408 has been returned to the host 103 before the system shuts down, the WRITE is successful, and the new data will be returned in a subsequent READ. When the ACK 408 did not get to the host 103, the WRITE operation is considered failed, and corresponding data content is allowed to be indeterminate, which includes being the new version of the data.

Similarly, the written data content is allowed to be indeterminate in both cases (a) and (b), since a command status would not have been issued to the host 103 before the machine shuts down, and the write operation is considered failed. In (a), the primary and mirror metadata remain in sync, and are still translating the block address to the old version of the data in both primary cache 107 and mirror cache 107 (in the case of a never-overwrite implementation), or to indeterminate content (in the case of write-in-place implementation). In case (b), the primary metadata will translate the block address to the new version of the data in primary cache 107, while the mirror metadata will translate to an old or a partially updated version of the data in mirror cache 107.

The fact that the two copies of metadata are out-of-sync in (b) will be discovered during a subsequent cache restoration procedure, when the checksums for the mirrored cache modules 107 are checked against each other. To simplify re-synchronizing the metadata, the LCM 203 should deposit, for example in a reserved region of the cache 107, a list identifying the abandoned operations (i.e., operations for which the primary metadata has been updated, but the mirror metadata update hasn't been acknowledged) before it returns an acknowledge message to the permanence manager 309 and shuts itself down. This list, and other corresponding metadata, are to be written out by the permanence manager 309 to the storage device 305, together with the associated data contents, all of which should be protected by a checksum.

When one of the copies fails to restore successfully under scenario (b), no synchronization is done when the mains power is restored. When the mirror copy could not be restored successfully, the system resumes using the new version of the metadata, resulting in a roll-forward. When the primary copy is not restored successfully, the system would then resume using the mirror copy, resulting in a roll back. Also note that the grace periods should be chosen to result in a well-defined order for their eventual shutdown, so that the components can go through a determinate resumption sequence should the complete shutdown procedure be aborted before all of the grace periods expired.

### 3. RESTORE PROCEDURE

When main power returns after the system has completely shut down, the cache content is restored from the miniature storage devices 305. The content is checked for consistency, and discrepancies are fixed before normal operation is resumed. The cache allocation manager portion of the PCM 315 is the first to be informed of power restoration. It performs the following activities:
1. Retrieve allocation metadata from permanent storage device.
2. Based on allocation metadata, instantiate/invoke permanence managers, distributing allocation metadata to corresponding permanence manager. Wait for cache modules to be restored and identify failed restorations.
3. Compare checksum and timestamps of mirror pairs. Identify discrepencies.
4. Based on allocation metadata, instantiate/invoke LCMs 203, distributing allocation metadata to corresponding LCM 203.
5. Instruct LCMs 203 to re-sync discrepancies and wait for ACK.
6. Check UPS reserve power. When sufficient reserve power exists for another shutdown/restore cycle, resume normal operation. Otherwise, resume operation in write-through mode until reserve power is sufficient, inform permanence managers and LCMs 203 regarding the write through operation mode.

The two copies of a mirror pair may potentially be out-of-sync in the event the LCMs 203 had to abandon some in-flight WRITE operations. Such discrepancies can be detected by a mismatch of the checksums from the two copies (however, the computed checksum and stored checksum for each copy should still be the same).

The permanence managers 309 perform the following activities:
1. Restore the cache content from the permanent storage device 305 back into cache 107, computing a checksum in the process.
2. Validate the computed checksum against the stored checksum. If no match, declare restoration failed.
3. Issue ACK to allocation manager, informing it of checksum value.
4. Go to sleep until the next shut down procedure.

In the event that a cache module (or a portion of it) fails to restore properly, the computed checksum and stored checksum would mismatch. The allocation manager 315 should place the affected logical storage devices 305 into write-through mode, and instruct the corresponding LCMs 203 to completely de-stage the data back to the home disks before turning the write cache on again. The physical cache manager should not attempt to copy the affected data and metadata from a mirror that was restored successfully, because the mirror copy may already be out-of-sync with the unrecoverable version due to abandoned WRITE operations. In the unlikely event that both copies of a mirror pair fail to restore properly, data loss may occur.

Upon invocation, the LCM 203 first checks its abandoned operations list, and reissues a cache fill notification (see earlier ladder diagram) to the mirror controller 109 for each mirror-WRITE operation that did not complete, (i.e., primary metadata updated, but mirror metadata update did not complete). The logical cache manager 203 should not issue any success status to the host 103 for those operations, since the corresponding operation is most likely already expired as far as the host 103 is concerned. This causes the metadata in the mirror pair to be resynchronized, and the LCM 203 may return an ACK to the allocation manager 315 when all is done. It is unnecessary to copy the data contents for these abandoned WRITEs, since the data content is considered indeterminate anyway as the operation had failed. When the data block is subsequently de-staged to disk, it may simply be taken from either copy of the cache 107.

When a copy of the mirror pair did not restore successfully however, the LCM 203 for the surviving copy simply clears away its abandoned operations list upon invocation and returns an ACK to the allocation manager 315. In either case, the allocation manager 315 may then instruct the LCMs 203 to either resume normal operation, or resume operation in write-through mode while de-staging the existing dirty data. The LCMs 203 should not return to normal caching operation until instructed as such by the allocation manager 315.

The above description assumes that the entire content of cache module is restored before normal service is resumed. As a measure to minimize this delay to service resumption, the permanence manager 309 may provide an ACK back to the allocation manager 315 as soon as the metadata is restored and validated. This however would require the LCM 203 to be able to fetch the user data directly from the miniature device 305 as necessary (e.g., when a host data access request identifies the cache data).

### 4. ABORTED SHUTDOWN (SHORT GLITCH & BROWN OUT)

In cases in which main power is restored before the shut down procedure is complete, the shut down procedure may be aborted so that the system can return to normal operation more quickly. If the content of some or all of the cache modules is still intact, the restore procedure may be completely or partially skipped. The allocation manager 315 is the first to be notified of main power restoration. The following sequence is performed:
1. Check UPS reserve power. If insufficient reserve power exists for another shutdown/restore cycle, continue shut down procedure. Otherwise wait/request for interconnect 101 and already-powered-down processor blades 301 to be brought back up and proceed with aborting shut down.
2. Retrieve allocation metadata from miniature storage device 305. Invoke/instantiate permanence managers 309 where appropriate.
3. Inform permanence managers 309 to abort copying process or start cache restoration procedure, as appropriate. Wait for ACK.
4. Invoke LCMs, instruct to resolve discrepancies. Wait for ACK.
5. Instruct LCMs to resume normal operation, or place volume in write through mode and de-stage if a copy of the mirror pair did not restore successfully.

Because permanence managers 309 operate independently of one another, some of the processor blades 301 may have already powered down while others are still writing the cache contents to the miniature storage device 305 when the allocation manager 309 decides to abort the shut down process. If the permanence manager 309 is still active when main power returns, it stops copying the cache contents into the miniature device 305, and places a marker, a timestamp and any partial checksums on the device to indicate when and where the copying was aborted. If the power should be interrupted again before the LCMs 203 are re-activated (i.e., no new updates to the cache), the permanence manager 309 may simply resume the copying process when told to re-initiate shutdown by the allocation manager 315. If the processor blade 201 had already powered-down when main power returns, the newly invoked permanence manager 309 performs the restoration procedure described before, since the cache modules would have lost their contents.

Because not all permanence managers 309 have completed their checksum computations, the allocation manager 315 cannot detect metadata discrepancies by comparing the checksums of the mirror pairs. Instead, allocation manager 315 instructs every primary LCM 203 to reissue the mirror cache fill notification for every abandoned WRITE operation (i.e., primary metadata updated, but mirror metadata update did not complete), withholding a status to the host for those operations. This may force the LCMs 203 to update the mirror metadata even though the two copies are already in-sync (e.g., the mirror LCM 203 had already completed the mirror metadata update, but that information had not yet reached the primary LCM 203 before they shut down). The metadata structure should be designed to handle such conditions because even if this condition doesn't happen here, it may still occur, for example, when messages are retried due to an link failure in interconnect 101 or the like.

### 5. ALTERNATE SOLUTION

As an alternative to using miniature storage devices to back up the contents of the cache DRAM, we may also implement the same concept by dumping the cache contents into a portion of the disk drives that are normally connected to the RAID system (for convenience, we will refer to these disk drives as "main drives"). Such an approach has a number of advantages: (a) it does not incur the cost of dedicated miniature storage devices, (b) the full-size main drives may have better throughput and reliability characteristics, and command a lower cost per megabyte.

With this alternate approach, it is important keep alive a path from the cache DRAM into the main drives when main power is interrupted. For firmware simplicity, it may be desirable to keep a fully redundant path alive during the process of copying from the cache DRAM into the main drives, so that the non-volatility solution is not subject to a single point of failure during such critical moments. A minimum of two main drives need to be kept alive to receive the cache contents, although more main drives may be used to reduced the length of the copying process.

Implementations of the present invention provide a mechanism for providing non-volatility in a cache module for a storage system that requires little power as compared to prior solutions while at the same time providing highly reliable non-volatile protection of data present in cache during a power interruption. As a result, the power source that is available during a power interruption can be quite small and can be tightly integrated in the system chassis of the storage system thereby reducing reliability issues that arise from large external power sources. Moreover, the implementations of the present invention allow the system to ride through brief power interruptions with minimal service interruption by keeping cache contents alive in the cache memory for a period of time while at the same time providing for indefinitely long power interruptions by copying cache contents to non-volatile storage while reserve power is available. Further, by taking advantage of a variety of miniature, low power yet high capacity non-volatile storage mechanisms that are becoming increasingly available, systems in accordance with the present invention scale well to allow protection of large physical caches.

Although the invention has been described and illustrated with a certain degree of particularity, it is understood that the present disclosure has been made only by way of example, and that numerous changes in the combination and arrangement of parts can be resorted to by those skilled in the art without departing from the scope of the invention, as hereinafter claimed.

## Claims

1. A non-volatile data cache comprising:
a cache memory coupled to an external power source and operable to cache data of at least one data device such that access requests for the data can be serviced by the cache rather than the at least one data device;
a non-volatile data storage device coupled to the cache memory; and
an uninterruptible power supply (UPS) coupled to the cache memory and the non-volatile data storage device so as to maintain the cache memory and the non-volatile storage device in an operational state for a period of time in the event of an interruption in the external power source.

2. The non-volatile data cache of claim 1 wherein the period of time is selected to allow the contents of the cache memory to be copied to the non-volatile data storage device.

3. The non-volatile data cache of claim 1 wherein the cache memory comprises at least one of:
volatile memory devices,
dynamic random access memory (DRAM),
static random access memory (SRAM),
memory devices that are physically distributed,
volatile random access memory.

4. The non-volatile data cache of claim 3 wherein the cache memory comprises memory devices that are physically distributed and the nonvolatile data cache further comprises a physical cache manager coupled to the distributed memory devices, wherein the physical cache manager is operable to create a unified cache pool from the physically distributed memory devices.

5. The non-volatile data cache of claim 1 wherein the at least one external data device comprises a number of virtualized storage volumes and the non-volatile data cache further comprises a plurality of logical cache managers, each of which manages caching functions for one or more of the virtualized storage volumes.

6. The non-volatile data cache of claim 1 wherein the non-volatile data storage device comprises at least one of:
at least one miniature disk drive,
flash memory.

7. The non-volatile data cache of claim 1 wherein the non-volatile data storage device is physically located in a housing with the cache memory.

8. The non-volatile data cache of claim 1 wherein the UPS comprises an energy storage device holding less than 10 Watt hours of energy.

9. The non-volatile data cache of any preceding claim wherein at least one data device is an external data device.

10. The non-volatile data cache of any preceding claim wherein the at least one data device is a plurality of mass storage devices.

11. A data storage system comprising:
an external power source, and
a non-volatile data cache as claimed in claim 10.

12. A method of protecting data during storage access operations comprising:
caching data from one or more data storage devices in volatile storage using a write-back cache policy, wherein the volatile storage is powered by a primary power source; and
in event of interruption of the primary power source, copying cached data to a miniature storage device.

13. The method of claim 12 further comprising powering the volatile storage and the miniature storage device using a secondary power source that is independent of the primary power source.

14. The method of claim 12 further comprising removing power from the volatile storage after copying the cached data.

15. The method of claim 12 further comprising removing power from the miniature storage device after copying the cached data.

16. The method of claim 12 further comprising:
determining when the primary power source is restored; and
copying the cached data from the miniature storage device to the volatile storage.

17. The method of claim 12 wherein the miniature storage device comprises one of:
a miniature disk drive.
a flash EEPROM memory.

18. A cache module implementing the method of any one of claims 12 to 17.

19. A disk drive implementing the method of any one of claims 12 to 17.

20. A data storage system implementing the method of any one of claims 12 to 17.
